# FASCICULE DE BREVET EUROPEEN

(11) **EP 2 214 246 B1**
(45) Date de publication et mention de la délivrance du brevet: **05.12.2012**
(21) Numéro de dépôt: 09181027.5
(22) Date de dépôt: 30.12.2009
(51) Int. Cl.: H01M 8/04, H01M 8/24, H01M 8/10

(54) **Pile à combustible à régulation d'humidité**
Brennstoffzelle mit Feuchtigkeitsregulierung
Fuel cell with humidity control

(30) Priorité: 19.01.2009 FR 0950313
(43) Date de publication de la demande: 04.08.2010
(73) Titulaire: STMicroelectronics (Tours) SAS, 37100 Tours (FR); Commissariat à l'Énergie Atomique et aux Énergies Alternatives, 75015 Paris (FR)
(72) Inventeur: Karst, Nicolas, 57600, FOLKLING (FR); Bouillon, Pierre, 37230, LUYNES (FR); Martin, Nelly, 37100, TOURS (FR); Martinent, Audrey, 38000, GRENOBLE (FR)
(74) Mandataire: de Beaumont, Michel

(56) Documents cités:
- WO-A-96/24958
- DE-A1- 19 641 143
- DE-A1- 19 703 171
- US-A- 6 127 058
- US-A1- 2006 166 071

## Description

### Domaine de l'invention

La présente invention concerne les piles à combustible et en particulier les piles à combustible à hydrogène-oxygène et concerne plus particulièrement le contrôle de l'humidification de telles piles.

### Exposé de l'art antérieur

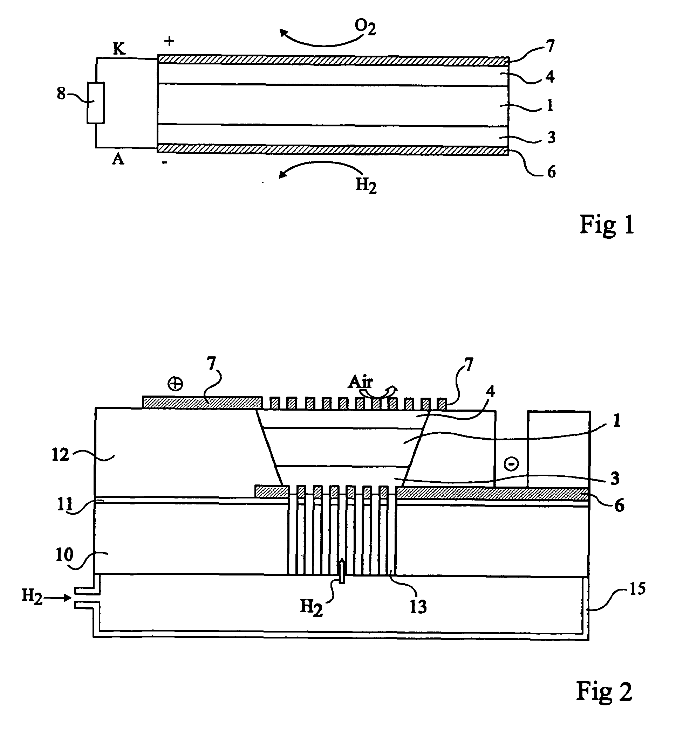

Comme l'illustre la figure 1, une pile à combustible à hydrogène-oxygène comprend une couche ou feuille d'un électrolyte 1 prise en sandwich entre deux couches ou feuilles de catalyseurs 3 et 4 revêtues de couches conductrices 6 et 7 destinées à la prise de contact. La face supérieure de la pile est en contact avec de l'oxygène, par exemple l'air ambiant, et la face inférieure de la pile est en contact avec de l'hydrogène.

Dans ces conditions, quand la pile est connectée à une charge 8, il apparaît une tension positive du côté de la face supérieure ou cathode et une tension négative du côté de la face inférieure ou anode et un courant circule dans la charge. Du côté anode, le catalyseur transforme des molécules d'hydrogène gazeux en deux protons et deux électrons, les protons se déplacent à partir de la couche de catalyseur d'anode à travers la couche d'électrolyte vers la couche de catalyseur de cathode où se produit la réaction 2H⁺+½O₂+2e⁻ → H₂0, les deux électrons circulant à travers la charge.

De façon courante, l'électrolyte 1 est du Nafion et le catalyseur 3, 7 est en un mélange de carbone platine, comprenant par exemple quelques pourcents de platine. Le catalyseur contient aussi de préférence une certaine quantité de Nafion, par exemple 20 à 40 %.

Les conducteurs 6 et 7 sont par exemple des couches d'or très minces pour à la fois être conductrices et être perméables à l'hydrogène ou à l'oxygène. Les conducteurs 6 et 7 peuvent aussi être constitués de grilles d'or.

La figure 2 représente une réalisation de pile à combustible utilisant des techniques de microélectronique. Cette cellule est formée sur une tranche de silicium 10 éventuellement revêtue d'une première couche isolante fine 11 et d'une deuxième couche isolante 12 plus épaisse. Une ouverture est formée dans une partie de la couche isolante 12. Dans cette ouverture sont successivement déposés une couche de catalyseur 3, un électrolyte 1 et une deuxième couche de catalyseur 4 (éventuellement, les épaisseurs de la couche isolante 12 et des couches 3, 1 et 4 sont telles qu'au moins certaines des couches 3, 1 et 4 débordent largement au-delà de l'ouverture). Une électrode inférieure 6, d'anode, permet de prendre un contact sur la couche de catalyseur inférieure 3. Une électrode supérieure 7, de cathode, permet de prendre un contact sur la couche de catalyseur supérieure 4. Les électrodes 6 et 7 sont munies d'ouvertures, et des canaux 13 sont formés dans la plaquette de silicium 10 en regard des ouvertures dans la métallisation de face inférieure. Par ailleurs, on a représenté une enceinte 15 du côté de la face inférieure de la pile, cette enceinte définit une chambre servant de réservoir tampon d'hydrogène qui est connectée à une source d'hydrogène ou à une source de production d'hydrogène.

Ceci ne constitue qu'un exemple de réalisation. Divers types de piles à combustible réalisables sous la forme illustrée en figure 2 sont connus dans la technique. Par exemple, la partie de la plaquette de silicium qui porte la cellule de pile proprement dite est de préférence amincie. C'est cette partie amincie de la plaquette 10 qui est percée de canaux 13 permettant le passage d'hydrogène. On comprendra que, d'une façon générale, toutes les surfaces de la plaquette sont revêtues d'un isolant constitué au moins d'oxyde de silicium natif.

On forme par tout moyen, par exemple par dépôt au jet d'encre, les couches 3 et 4 de catalyseur. La couche de Nafion 1 est déposée, par exemple à la tournette. Dans une telle pile à combustible, la puissance pouvant être fournie est notamment proportionnelle à la surface occupée par la cellule dans le plan de la plaquette de silicium. De façon courante, la surface utile d'une pile à combustible du type décrit en relation avec la figure 2 est de 1 à 3 cm².

Ces piles à combustible à hydrogène-oxygène sont particulièrement adaptées à être installées dans des dispositifs portables tels que des téléphones ou des ordinateurs portables. Elles posent toutefois un problème d'utilisation, à savoir que, comme on l'a vu précédemment, les réactions liées au fonctionnement de la pile impliquent la génération d'eau et les piles fonctionnent de façon optimale quand la teneur en eau dans l'électrolyte est située dans une plage limitée. Dans l'art antérieur, on a utilisé différents moyens pour assurer l'humidification de la pile, notamment si celle-ci s'assèche en cours de fonctionnement, par exemple parce qu'elle est placée dans une atmosphère très sèche, ou parce que les conditions mêmes de fonctionnement sont des conditions peu propices à la fourniture d'eau (tension élevée et faible courant). Les moyens d'humidification proposés dans l'art antérieur sont généralement complexes, et impliquent par exemple l'addition de vapeur d'eau aux gaz (air ou oxygène et hydrogène) alimentant la pile. En outre, la mesure du taux d'humidité de l'électrolyte implique généralement une interruption du fonctionnement normal de la pile.

La demande de brevet US 2006/166071 décrit une pile à combustible incorporant un système de gestion d'humidité.

### Résumé de l'invention

Un objet d'un mode de réalisation de la présente invention est de prévoir un système de régulation de la teneur en humidité d'une pile à combustible qui évite au moins certains des inconvénients des systèmes existants.

Un autre objet d'un mode de réalisation de la présente invention est de prévoir un système de régulation de la teneur en humidité d'une pile à combustible qui agisse sans interrompre le fonctionnement normal de la pile.

Un autre objet d'un mode de réalisation de la présente invention est de prévoir un tel dispositif qui soit particulièrement simple.

Un autre objet d'un mode de réalisation de la présente invention est de prévoir un tel dispositif qui n'implique pas l'utilisation de techniques autres que les techniques usuelles de fabrication d'une pile à combustible.

Pour atteindre ces objets ainsi que d'autres, un mode de réalisation de la présente invention prévoit une pile à combustible à hydrogène-oxygène telle que revendiquée en revendication 1.

Selon un mode de réalisation de la présente invention, les moyens de mesure du taux d'humidité comprennent des moyens de mesure d'impédance.

Selon un mode de réalisation de la présente invention, la pile auxiliaire est disposée à la périphérie de la pile principale.

### Brève description des dessins

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 est une vue en coupe très schématique d'une pile à combustible ;
la figure 2 est une vue en coupe schématique d'un exemple de réalisation de pile à combustible selon l'art antérieur ;
la figure 3 est une vue en coupe très schématique d'une pile à combustible selon un mode de réalisation de la présente invention;
la figure 4 représente un exemple de circuit de commande d'une pile à combustible selon un mode de réalisation de la présente invention ;
la figure 5 est une vue en coupe schématique d'une pile à combustible selon un mode de réalisation de la présente invention ; et
la figure 6 est une vue de dessus schématique d'un mode de réalisation d'une pile à combustible selon la présente invention.

Par souci de clarté, de mêmes éléments ont été désignés par de mêmes références aux différentes figures et, de plus, comme cela est habituel dans la représentation des composants intégrés, les diverses figures ne sont pas tracées à l'échelle.

### Description détaillée

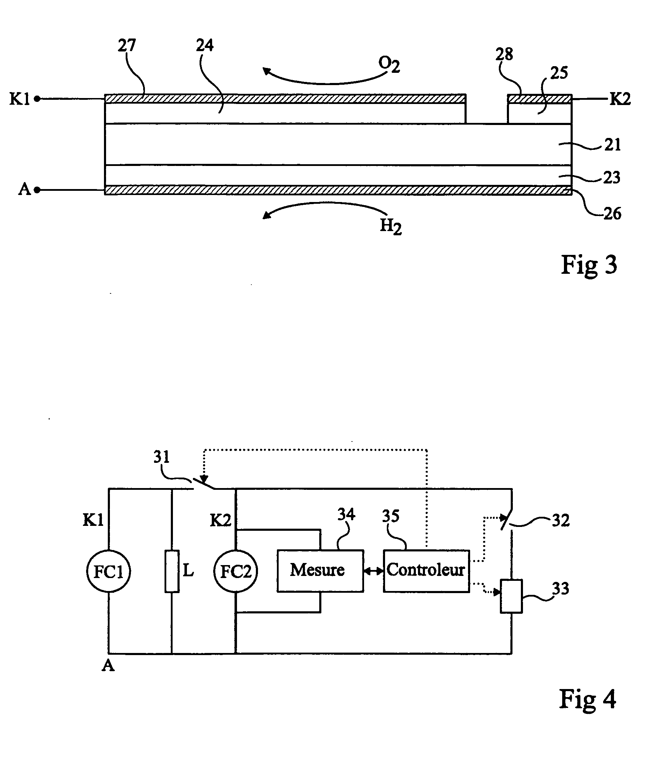

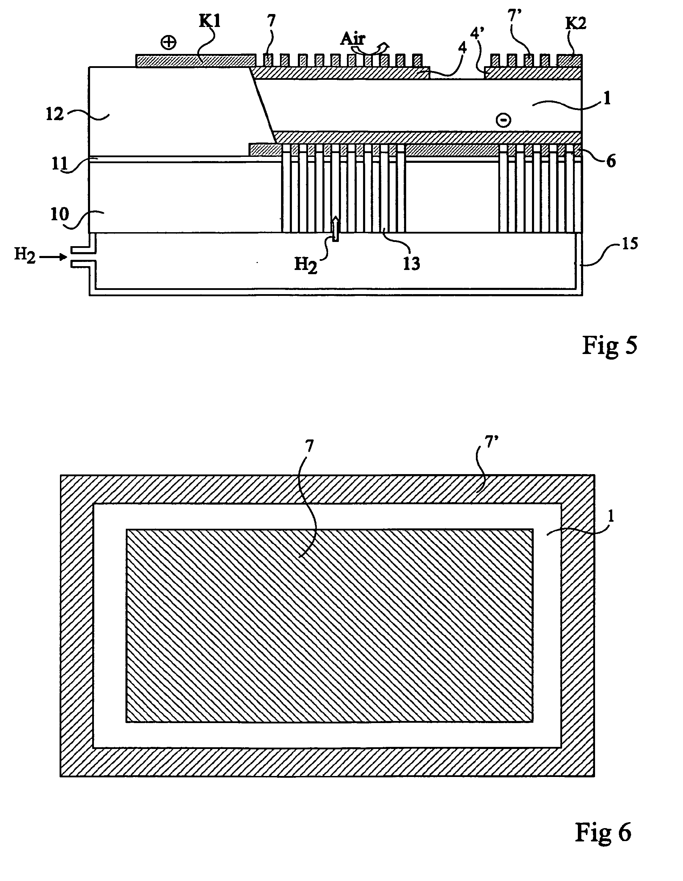

La figure 3 représente très schématiquement, de façon similaire à ce qui a été fait en relation avec la figure 1, la structure générale d'une pile à combustible selon un mode de réalisation de la présente invention. La pile à combustible est divisée en une pile principale et une pile auxiliaire qui partagent un même électrolyte 21. Du côté de la face inférieure, on retrouve une couche de catalyseur 23 et une couche conductrice 26. Du côté de la face supérieure, sont disposées une première couche de catalyseur principale 24 et une deuxième couche de catalyseur auxiliaire 25, ces deux couches étant disjointes et étant respectivement revêtues de métallisations 27 et 28. Ainsi, la pile comporte une anode unique A et deux cathodes K1 et K2. Comme cela sera illustré ci-après en relation avec la figure 6, la cathode K2 est par exemple périphérique par rapport à la cathode K1. L'électrolyte étant perméable à l'eau, il y existe une bonne diffusion des molécules d'eau et le taux d'humidité est homogène dans tout l'électrolyte aussi bien du côté pile principale que du côté pile auxiliaire.

Il est prévu de tester périodiquement la pile auxiliaire pour vérifier si le taux d'humidité de l'électrolyte est bon. Selon un avantage de la présente invention, le test peut être fait sans interrompre le fonctionnement de la pile principale. Si le taux d'humidité n'est pas satisfaisant, on fait fonctionner la pile auxiliaire sur un circuit de charge distinct du circuit de charge principal, dans des conditions propres à augmenter le taux d'humidité de l'électrolyte. Cela peut consister à faire fonctionner la pile auxiliaire à forte densité de courant, par exemple en la mettant en court-circuit ou en quasi court-circuit.

La figure 4 représente un exemple de circuit pouvant être utilisé pour la mise en oeuvre de l'invention. En figure 4, la pile principale est désignée par FC1 et la pile auxiliaire par FC2. Ces deux piles alimentent normalement une charge L, par exemple les circuits d'un téléphone portable, éventuellement par l'intermédiaire d'un condensateur tampon. Un interrupteur 31 est disposé entre la cathode K2 de la pile FC2 et la charge L. Les bornes A et K2 de la pile auxiliaire sont connectées par l'intermédiaire d'un interrupteur 32 à une charge supplémentaire 33. Les bornes de la pile FC2 sont également connectées à un circuit de mesure 34. Un contrôleur 35 commande le circuit de mesure 34, les interrupteurs 31 et 32 et éventuellement la charge 33. Le circuit de mesure et le contrôleur sont par exemple alimentés par la pile auxiliaire.

En fonctionnement normal, l'interrupteur 31 est fermé et l'interrupteur 32 est ouvert. Les deux piles FC1 et FC2 alimentent ensemble la charge L. De façon périodique, le contrôleur 35 ouvre l'interrupteur 31 et met en route le circuit de mesure qui détermine les caractéristiques de l'électrolyte, par exemple par une mesure d'impédance (ou de spectrométrie d'impédance électrochimique) ou par tout autre moyen connu dans la technique. Si la mesure indique que l'électrolyte n'est pas assez humide, le contrôleur maintient l'interrupteur 31 ouvert et l'interrupteur 32 est fermé de sorte que la pile FC2 débite fortement dans la charge 33. La charge est éventuellement une charge contrôlable commandée par le contrôleur 35. Il pourra aussi s'agir d'un simple court-circuit ou d'une faible résistance. Pendant les phases de réhumidification de l'électrolyte, le contrôleur vérifie les indications données par le circuit de mesure 34 et interrompt les phases de réhumidification en réouvrant l'interrupteur 32 dès que le taux d'humidité dans l'électrolyte est suffisant. Alors, le commutateur 31 est refermé et les deux piles fonctionnent ensemble pour alimenter la charge L. Le contrôleur effectue seulement périodiquement les vérifications de taux d'humidité, par exemple en ouvrant le commutateur 31 pendant une courte période et en effectuant une mesure, par exemple toutes les minutes.

On notera que la mise en oeuvre d'un composant à pile auxiliaire est particulièrement bien adaptée aux structures du type décrit en relation avec la figure 2. La figure 5 est une vue en coupe correspondant à la figure 2 et illustrant une pile à combustible selon la présente invention. Les mêmes éléments qu'en figure 2 sont désignés par les mêmes références, et la couche de catalyseur et la couche conductrice de la pile auxiliaire sont désignées par les références 4' et 7'.

La figure 6 représente une vue de dessus schématique d'une pile telle que celle de la figure 5 dans laquelle la pile auxiliaire est disposée à la périphérie de la pile principale.

Bien entendu, la présente invention est susceptible de nombreuses variantes qui apparaîtront à l'homme de métier. En particulier, on a décrit précédemment une pile dans laquelle la pile principale et la pile auxiliaire ont une anode commune et des cathodes distinctes. On pourra également prévoir la situation inverse ou encore le cas où à la fois l'anode et la cathode sont distinctes.

La présente invention a été décrite plus particulièrement en relation avec des modes de réalisation concernant une réalisation particulière de pile à combustible dans lequel divers matériaux sont déposés par couches successives. L'invention s'applique également au cas où la pile est formée à partir de feuilles des divers matériaux accolées et par exemple assemblées sous pression.

Divers modes de réalisation avec diverses variantes ont été décrits ci-dessus. L'homme de l'art pourra combiner divers éléments de ces divers modes de réalisation et variantes sans faire preuve d'activité inventive. De plus, des matériaux autres que du Nafion pourront être utilisés pour l'électrolyte et des matériaux autres que du carbone/platine pourront être utilisés pour le catalyseur, par exemple du carbone/platine-cobalt ou du carbone/platine-nickel.

## Revendications

1. Pile à combustible à hydrogène-oxygène comprenant :
une pile principale et une pile auxiliaire partageant un électrolyte (21) commun et ayant au moins une électrode (27, 28) distincte,
des moyens (34) de mesure du taux d'humidité de l'électrolyte, et
des moyens de commande et de commutation (35, 31, 32) pour faire fonctionner les piles principale et auxiliaire en parallèle sur une même charge (L) ou séparément sur des charges distinctes (L, 33);
dans laquelle les moyens de commande comprennent des moyens (31) pour déconnecter périodiquement la pile auxiliaire de la pile principale, déclencher la mesure du taux d'humidité, et, si le taux d'humidité est inférieur à un seuil souhaité, connecter la pile auxiliaire à une charge (33) l'amenant à fonctionner dans des conditions de forte production d'humidité.

2. Pile à combustible selon la revendication 1, dans laquelle les moyens de mesure du taux d'humidité comprennent des moyens de mesure d'impédance.

3. Pile à combustible selon la revendication 1 ou 2, dans laquelle la pile auxiliaire est disposée à la périphérie de la pile principale.

## Claims

1. A hydrogen-oxygen fuel cell comprising:
a main cell and an auxiliary cell sharing a common electrolyte (21) and having at least one separate electrode (27, 28),
means (34) for measuring the humidity ratio of the electrolyte, and
control and switching means (35, 31, 32) for operating the main and auxiliary cells in parallel on a same load (L) or separately on two different loads (L, 33);
wherein the control means comprise means (31) for periodically disconnecting the auxiliary cell from the main cell, triggering the humidity ratio measurement and, if the humidity ratio is below a desired threshold, connecting the auxiliary cell to a load (33) which has it operate in high humidity generation conditions.

2. The fuel cell of claim 1, wherein the humidity ratio measurement means comprise impedance measurement means.

3. The fuel cell of claim 1 or 2, wherein the auxiliary cell is arranged at the periphery of the main cell.

## Patentansprüche

1. Wasserstoff-Sauerstoff-Brennstoffzelle, die Folgendes aufweist:
eine Hauptzelle und eine Hilfszelle, die ein gemeinsames Elektrolyt (21) teilen und zumindest eine separate Elektrode (27, 28) aufweisen,
Mittel (34) zum Messen des Feuchtigkeitsverhältnisses des Elektrolyts, und
Steuer- und Schaltmittel (35, 31, 32) zum Bedienen der Haupt- und Hilfszellen parallel bei einer gleichen Last (L) oder separat mit zwei unterschiedlichen Lasten (L, 33);
Wobei das Steuermittel Mittel (31) zum periodischen Trennen der Hilfszelle von der Hauptzelle, zum Auslösen der Feuchtigkeitsverhältnismessung, und wenn das Feuchtigkeitsverhältnis unterhalb eines erwünschten Schwellenwerts liegt, zum Verbinden der Hilfszelle mit einer Last (33) aufweist, die bewirkt, dass diese bei hohen Feuchtigkeitserzeugungsbedingungen betrieben wird.

2. Brennstoffzelle gemäß Anspruch 1, wobei das Mittel für die Feuchtigkeitsverhältnismessung ein Impedanz-Messmittel aufweist.

3. Brennstoffzelle gemäß Anspruch 1 oder 2, wobei die Hilfszelle an dem Umfang der Hauptzelle angeordnet ist.
